# EUROPÄISCHE PATENTSCHRIFT

(11) **EP 1 690 445 B1**
(45) Veröffentlichungstag und Bekanntmachung des Hinweises auf die Patenterteilung: **30.09.2009**
(21) Anmeldenummer: 06002022.9
(22) Anmeldetag: 01.02.2006
(51) Int. Cl.: A01D 51/00

(54) **Handgeführte Vorrichtung zum Aufnehmen von Früchten**
Handguided device for collecting fruits
Dispositif guidé à la main pour collecter des fruits

(30) Priorität: 12.02.2005 DE 102005006422
(43) Veröffentlichungstag der Anmeldung: 16.08.2006
(73) Patentinhaber: Andreas Stihl AG & Co. KG, 71336 Waiblingen (DE)
(72) Erfinder: Mang, Harald, Dipl.-Ing., 71364 Winnenden (DE); Maier, Georg, Dr. Ing., 71394 Kernen (DE); Layher, Wolfgang, Dipl.-Ing., 71336 Waiblingen (DE); Erkert, Alexander, 71404 Korb (DE); Mildner, Marc, 73553 Alfdorf (DE)
(74) Vertreter: Wasmuth, Rolf

(56) Entgegenhaltungen:
- US-A- 2 552 382
- US-A- 2 933 748
- US-A- 3 308 613
- US-A- 3 591 883
- US-A- 5 121 592

## Beschreibung

Die Erfindung betrifft eine handgeführte Vorrichtung zum Aufnehmen von Gegenständen, insbesondere von Früchten, wie Äpfeln, Nüssen, Kastanien, Oliven, Kaffeekirschen oder dgl. nach dem Oberbegriff des Anspruchs 1.

Eine derartige Vorrichtung ist aus der US 4,982,559 bekannt. Im vorderen Bereich eines Gehäuses, das über Laufräder am Boden abgestützt ist, ist eine Aufnahmewalze zum Aufnehmen von Früchten drehbar gelagert. Das Gehäuse ist als tragendes Chassis für einen Antriebsmotor vorgesehen und als Dreirad konzipiert. Die Aufnahmewalze liegt quer zur Arbeitsrichtung und kehrt die aufzunehmenden Früchte nach dem Kehrprinzip auf, wobei diese am Ende des Kehrbleches durch einen Spalt und eine Schikane in ein in das Gehäuse einzusetzendes Sammelnetz fallen. Die konstruktive Gestaltung ermöglicht eine mechanische Trennung der aufzunehmenden Früchte (z.B. Nüsse) von Beifang (Staub, Schmutz, Laub).

Diese fahrbare Vorrichtung ist über eine Lenkerstange zu führen, in ihren Abmessungen aber sehr groß und daher nur auf entsprechenden Flächen zu nutzen. Auf unebenen Flächen ist eine Aufnahme von in Bodensenken liegenden Früchten nur schwer möglich; bei enger Bepflanzung ist die Vorrichtung aufgrund ihrer Größe nicht einsetzbar.

Aus der US 2,933,748 geht ein handgeführtes Kehrgerät hervor, dessen Kehrwalze von einem oberhalb der Kehrwalze angeordneten Antriebsmotor rotierend angetrieben ist. Im Bereich der Enden der Kehrwalze sind Räder angeordnet.

Die US 2,552,382 zeigt eine handgeführte Vorrichtung zum Aufnehmen von Blättern, geschnittenem Gras oder dgl. Die Aufnahmewalze ist über seitlich der Aufnahmewalze angeordnete Räder angetrieben. Aufgesammeltes Gut wird entlang einer Leitwand in eine hinter den Rädern hergezogene Aufnahme gefördert.

Die US 3,308,613 zeigt eine Einrichtung zum Sammeln von Nüssen mit einer Aufnahmewalze, die Nüsse entlang eines Leitgitters in einen Aufnahmebehälter fördert. Seitlich des Aufnahmebehälters sind Räder angeordnet. Zum Antrieb der Räder und der Aufnahmewalze ist ein Antriebsmotor vorgesehen, der hinter dem Aufnahmebehälter angeordnet ist.

Der Erfindung liegt die Aufgabe zugrunde, eine Vorrichtung der gattungsgemäßen Art derart auszubilden, daß bei hoher Aufnahmeleistung ein zufriedenstellender Einsatz sowohl auf unebenen Böden als auch bei enger Bepflanzung möglich ist.

Die Aufgabe wird erfindungsgemäß nach den kennzeichnenden Merkmalen des Anspruchs 1 gelöst.

Die erfindungsgemäße Vorrichtung hat kein Fahrwerk, sondern stützt sich lediglich über an den Enden der Aufnahmewalze angeordnete Bodenstützen am Boden ab.

Über die Breite der Aufnahmewalze liegt ein Wandabschnitt des Gehäuses etwa auf Höhe des Außendurchmessers der Aufnahmewalze, so daß dieser zusammen mit der Aufnahmewalze derart zusammenwirken kann, daß aufzunehmende Früchte entlang des Wandabschnittes von der Aufnahmewalze in Richtung auf den Sammelkanal beschleunigt werden und die aufgenommenen Früchte auf einer Flugbahn aus dem Walzenraum über den Sammelkanal in den Sammelbehälter ausgeworfen werden.

Die gewählte konstruktive Gestaltung ermöglicht ein einfaches Führen der Vorrichtung über den Boden, wobei die Aufnahmewalze den Bodenunebenheiten folgt und eine sichere Aufnahme von Früchten gewährleistet.

Die Vorrichtung erhält durch die konstruktive Gestaltung eine große Wendigkeit, so daß auch ein Einsatz bei enger Bepflanzung möglich ist. Der Kraftaufwand für den Benutzer beim Führen und Bewegen der erfindungsgemäßen Vorrichtung ist gering, so daß auch über einen längeren Zeitraum ermüdungsarm gearbeitet werden kann.

Vorteilhaft haben die Bodenstützen eine gemeinsame Stützachse, die benachbart und vorzugsweise parallel zur Drehachse der Aufnahmewalze liegt. Die gewählte Lage und Anordnung der Bodenstützen stellt insbesondere sicher, daß beim Arbeiten mit der Vorrichtung die sichere Aufnahme von Früchten oder dergleichen Gegenständen auch aus Bodensenken möglich ist.

Setzt sich der Wandabschnitt in einen Leitabschnitt, vorzugsweise in einer gewölbten Wurfhaube fort, kann eine schonende Aufnahme auch weicherer Früchte ohne Verletzung der Schale erfolgen. Die Wölbung der Wurfhaube ist dem Verlauf einer parabelförmigen Flugbahn des aufzunehmenden Gegenstandes angepaßt ausgebildet, so daß ein stumpfes Aufprallen auf die Wurfhaube und somit eine Verletzung der aufzunehmenden Teile vermieden ist.

Das Führen des Arbeitsgerätes und die Aufnahmeleistung sind durch die Arbeitsdrehrichtung der Aufnahmewalze beeinflußt. Die Arbeitsrichtung ist daher derart gewählt, daß die Gegenstände auf einer Flugbahn über die Aufnahmewalze hinweg in den Sammelbehälter gefördert werden. Dies gewährleistet ein zweckmäßiges Arbeiten.

Um den Bodenkontakt der Aufnahmewalze in vorgegebenen Grenzen halten zu können ist der Abstand der Drehachse der Aufnahmewalze zur Stützachse zweckmäßig kleiner als der Durchmesser der Aufnahmewalze gewählt. Insbesondere liegt die Stützachse in einem Raumbereich, der durch einen Kreis um die Drehachse der Aufnahmewalze bestimmt ist. Der Radius R dieses Kreises ist kleiner gewählt als das 0,4-fache des Durchmessers der Aufnahmewalze. Bevorzugt ist der Durchmesser des Kreises kleiner als das 0,75-fache des Durchmessers der Aufnahmewalze.

Es kann zweckmäßig sein, die Stützachse relativ zur Drehachse der Aufnahmewalze verstellbar auszubilden, so daß der Bodenkontakt der Aufnahmewalze einstellbar ist. Vorteilhaft ist die Verstellvorrichtung derart ausgebildet, daß der Relativabstand zwischen der Aufstandsfläche der Bodenstütze und dem Außenmantel der Aufnahmewalze in einem Bereich von +/- 10 mm einstellbar ist. Dies gewährleistet eine Anpassung an die aufzunehmenden Früchte.

Die Bodenstützen sind vorteilhaft als Laufräder ausgebildet, wobei zweckmäßig an jedem axialen Ende der Aufnahmewalze ein Laufrad angeordnet sein kann. Die Stützachse ist dabei von der gemeinsamen Drehachse der Laufräder gebildet. Die Anordnung von mehreren Laufrädern an einem Ende der Aufnahmewalze kann zweckmäßig sein, z.B. über eine Pendelschwinge, deren Pendelachse die Stützachse bildet. In einer geeigneten Ausführung sind der Durchmesser der Laufräder und der Außendurchmesser der Aufnahmewalze gleich gewählt.

Die Vorrichtung hat vorteilhaft eine Arbeitsbreite von nicht mehr als etwa 800 mm; insbesondere ist eine Arbeitsbreite von etwa 400 mm vorgesehen, die eine gute Aufnahmekapazität auch bei sehr welligen Böden und enger Bepflanzung gezeigt hat.

Der mit der Aufnahmewalze zusammenwirkende Wandabschnitt begrenzt an seiner dem Boden zugewandten Gehäusekante einen Eintrittsspalt. Dieser ist zweckmäßig mit einer Aufnahmehilfe versehen, die als flexibler Lappen, als flexibles Hohlprofil wie ein Gummi-Hohlprofil oder als Schaumstoffkeil ausgebildet sein kann. Die Keilform ist beim Aufnehmen von größeren Früchten wie Äpfeln o. dgl. vorteilhaft, da der Keil auf den Apfel aufgleitet und er so in den Wirkbereich der Aufnahmewalze gelangen kann.

Die Aufnahmewalze kann als Lamellenwalze, als Scheibenwalze oder als Schaumstoffwalze ausgebildet sein. Dabei ist die Aufnahmewalze zweckmäßig aus zwei Walzenabschnitten zusammengesetzt, zwischen denen ein vorzugsweise die Walzenwelle antreibendes Getriebe angeordnet ist. Für eine zweckmäßige Gestaltung ist die Handhabe als Führungsstab ausgebildet, der zentral aus dem Gehäuse vorsteht und ein einfaches Führen des Gerätes ermöglicht. Der Führungsstab liegt in normaler Betriebslage in einem Winkel von etwa 25° bis 40° zum Boden. Die Winkellage kann - abhängig vom Einsatzfall und der Topographie - von diesem Winkelbereich abweichen.

Wird der Führungsstab als Führungsrohr für eine Antriebswelle vorgesehen, kann der Antrieb an dem einen Ende des Führungsstabes und die angetriebene Aufnahmewalze am anderen Ende des Führungsstabes liegen. Dadurch wird eine gute Gewichtsverteilung erzielt.

Das Gehäuse kann auf der dem Führungsstab zugewandten Seite im wesentlichen offen sein und wird durch den anzusetzenden Sammelbehälter verschlossen. Zweckmäßig sind Wandbereiche des Sammelbehälters, insbesondere dessen Boden, nach Art eines Gitterrostes ausgebildet. Über den Sammelkanal mit den Früchten zugeführter Beifang kann so wieder austreten und setzt nicht den Sammelbehälter zu.

Der Sammelbehälter wird auf den Führungsstab aufgesetzt und übergreift diesen, wozu eine mittig im Sammelbehälter ausgebildete U-förmige Aufnahme dient. Der Führungsstab liegt in der U-förmigen Aufnahme, wobei der Schwerpunkt des Sammelbehälters auf dessen Längsmittelebene liegt, die die U-förmige Aufnahme symmetrisch teilt. Aufgrund des schrägstehenden Führungsstabes wird sich ein auf den Führungsstab aufgesetzter Sammelbehälter unter Wirkung der Gewichtskraft an die offene Gehäuseseite anlegen. Über Zentrierelemente wird der Sammelbehälter drehfest am Gehäuse fixiert. Die Zentrierelemente bilden einen Teil eines Pendelgelenkes, dessen Pendelachse zur Drehachse der Aufnahmewalze etwa parallel liegt. Wird der Führungsstab auf dem Boden abgelegt, sitzt der Boden des Sammelbehälters auf den Boden auf; das Pendelgelenk erlaubt eine Relativverschiebung zwischen dem Sammelbehälter und der Wurfhaube, so daß Beschädigungen im Anschlußbereich des Sammelbehälters vermieden sind.

Da der Sammelbehälter nach oben offen ist, ist für die Bedienungsperson jederzeit der Füllstand zu überwachen. Zweckmäßig werden im Betrieb durch eine Hilfsperson Wechselsammelbehälter vorrätig gehalten, so daß ein fast unterbrechungsfreies Arbeiten möglich ist.

Mittels einer Separiereinrichtung wird der Beifang von den aufzunehmenden Früchten getrennt. Diese kann vor der Aufnahmewalze in Form eines Rostes oder Gitters ausgebildet sein oder als mechanische Barriere zwischen dem Walzenraum und dem Sammelbehälter vorgesehen sein. Vorzugsweise ist die mechanische Barriere durch einen Vorhang gebildet, der z.B. aus Rundschnüren gebildet ist, die durch Gewichtskraft herunterhängen. Die mechanische Barriere kann dabei am Sammelbehälter ausgebildet sein.

Weitere Merkmale der Erfindung ergeben sich aus den weiteren Ansprüchen, der Beschreibung und der Zeichnung, in der ein nachfolgend im einzelnen beschriebenes Ausführungsbeispiel der Erfindung dargestellt ist. Es zeigen:
- Fig. 1: in perspektivischer Darstellung eine schematische Ansicht einer handgeführten Vorrichtung zum Aufnehmen von Gegenständen,
- Fig. 2: eine schematische Darstellung des Grundaufbaus der Vorrichtung nach Fig. 1,
- Fig. 3: in vergrößerter Darstellung das Gehäuse und den Sammelbehälter der Vorrichtung nach Fig. 1,
- Fig. 4: einen Schnitt durch das Gehäuse und den Sammelbehälter der Vorrichtung nach Fig. 1,
- Fig. 5: in schematischer Darstellung eine mechanische Barriere in Form einer Bürste,
- Fig. 6: eine als Schaumstoffwalze ausgebildete Aufnahmewalze im Axialschnitt,
- Fig. 6a: die Stirnansicht auf die Aufnahmewalze nach Fig. 6,
- Fig. 7: eine als Scheibenwalze ausgebildete Aufnahmewalze im Axialschnitt,
- Fig. 7a: eine Ansicht auf die Stirnseite der Aufnahmewalze nach Fig. 7,
- Fig. 8: einen Axialschnitt durch eine als Lamellenwalze ausgebildete Aufnahmewalze,
- Fig. 8a: eine Stirnansicht auf die Aufnahmewalze nach Fig. 8,
- Fig. 9: eine schematische Darstellung der erfindungsgemäßen Vorrichtung mit einer den Sammelbehälter abnehmenden Bedienungsperson,
- Fig. 10: eine Seitenansicht auf die erfindungsgemäße Vorrichtung mit vom Gehäuse getrenntem Sammelbehälter,
- Fig. 11: eine schematische Darstellung auf den Sammelbehälter nach Fig. 10 von hinten,
- Fig. 12: eine Schnittansicht durch eine erfindungsgemäße Vorrichtung in einer Darstellung gemäß Fig. 4,
- Fig. 13: eine perspektivische Darstellung des Sammelbehälters,
- Fig. 14: eine Ansicht auf den Sammelbehälter nach Fig. 13 von der Gehäuseseite aus gesehen,
- Fig. 15: eine Draufsicht auf den Sammelbehälter nach Fig. 13,
- Fig. 16: eine schematische Darstellung einer Bodenstütze in Form von zwei an einem Ende der Aufnahmewalze angeordneten Laufrädern,
- Fig. 17: eine schematische Darstellung einer Bodenstütze in Form einer Gleitkufe,
- Fig. 18: eine schematische Darstellung eines Laufrades mit einer Drehachse im Abstand zur Drehachse der Aufnahmewalze.

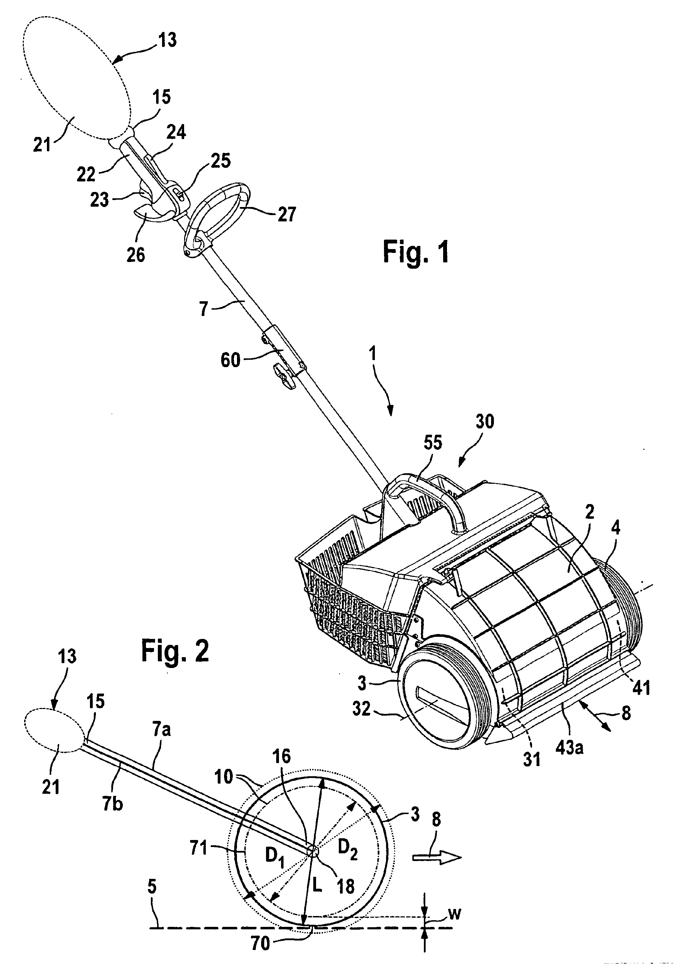

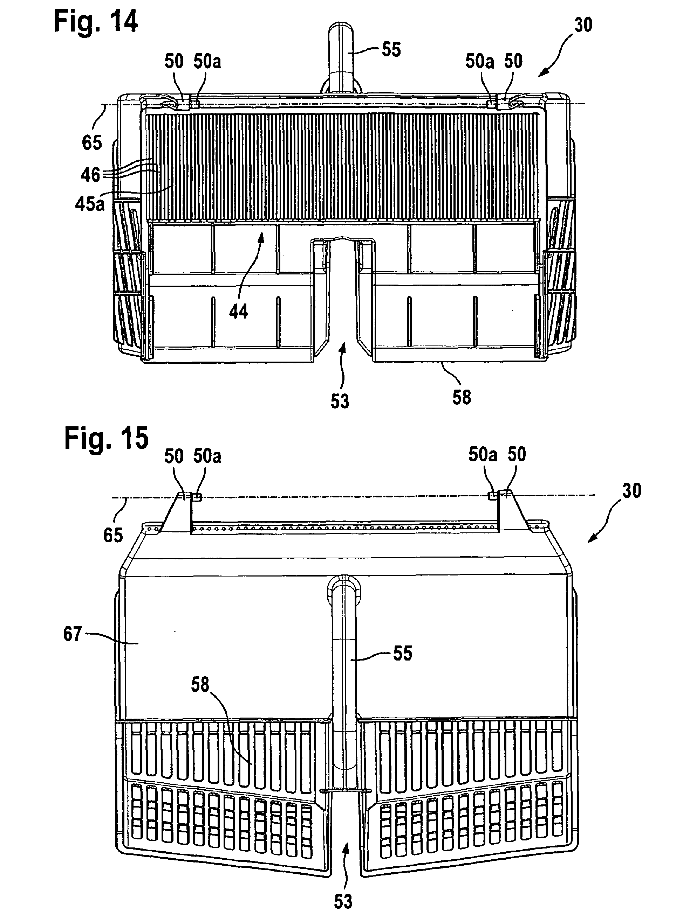

Die in den Fig. 1 bis 18 dargestellte erfindungsgemäße Vorrichtung dient dem Aufnehmen von Gegenständen, insbesondere von Früchten wie Nüssen, Kastanien, Oliven, Kaffeekirschen oder dgl.. Bei entsprechender Ausgestaltung ist auch das Aufsammeln von Äpfeln (Mostäpfel) oder dgl. Obst möglich.

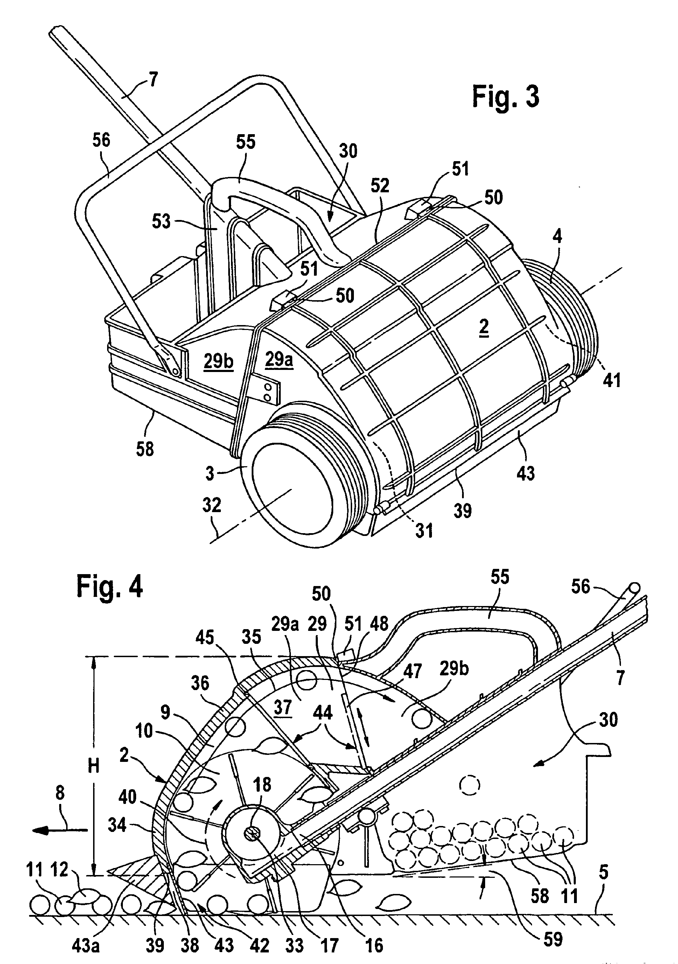

Die Vorrichtung 1 besteht im wesentlichen aus einem Gehäuse 2, welches über Bodenstützen 3, 4 am Boden 5 abgestützt ist. Die Bodenstützen sind bevorzugt als Laufräder ausgebildet. Mittig zum Gehäuse 2 ist auf einer einem Benutzer 6 zugewandten Seite des Gehäuses 2 eine Handhabe 7 angeordnet, mit der die Vorrichtung in Arbeitsrichtung 8 hin und her zu bewegen ist. Die Handhabe ist im gezeigten Ausführungsbeispiel als Führungsstab ausgebildet. Wie Fig. 4 zeigt, ist im Gehäuse 2 ein Walzenraum 9 vorgesehen, in dem eine Aufnahmewalze 10 zum Aufnehmen von Gegenständen 11, 12 drehbar gelagert. Die Aufnahmewalze 10 liegt etwa quer zur Arbeitsrichtung 8 und wird von einem Antrieb 13 rotierend angetrieben. Bevorzugt schließen die Drehachse 33 der Aufnahmewalze 10 und die Arbeitsrichtung 8 einen Winkel von 90 Grad ein; hiervon abweichende Lagen können vorteilhaft sein, insbesondere kann der Winkel um 90 Grad stark variieren.

Zum Antrieb der Aufnahmewalze 10 ist der eine Handhabe bildende Führungsstab 7 bevorzugt als Führungsrohr 7a gestaltet, in dem eine Antriebswelle 7b gelagert ist. An dem einen Ende 15 des Führungsstabs 7 ist der Antrieb 13 vorgesehen, während an dem anderen Ende 16 die Aufnahmewalze 10 rotierend angetrieben ist.

In bevorzugter Ausgestaltung der Erfindung ist an dem im Gehäuse 2 liegenden Ende 16 des Führungsstabes 7 ein Getriebe 17 vorgesehen, welches die zentrale Welle 18 der Aufnahmewalze 10 unmittelbar antreibt. Das Getriebe 18 liegt bevorzugt mittig in der Aufnahmewalze 10, die bevorzugt aus zwei Walzenabschnitten beiderseits des Getriebes 18 zusammengesetzt ist. Die Walzenabschnitte beidseitig des Getriebes 18 sind dabei identisch ausgebildet, so daß der Führungsstab 7 in einfacher Weise mittig im Gehäuse 2 angeordnet werden kann.

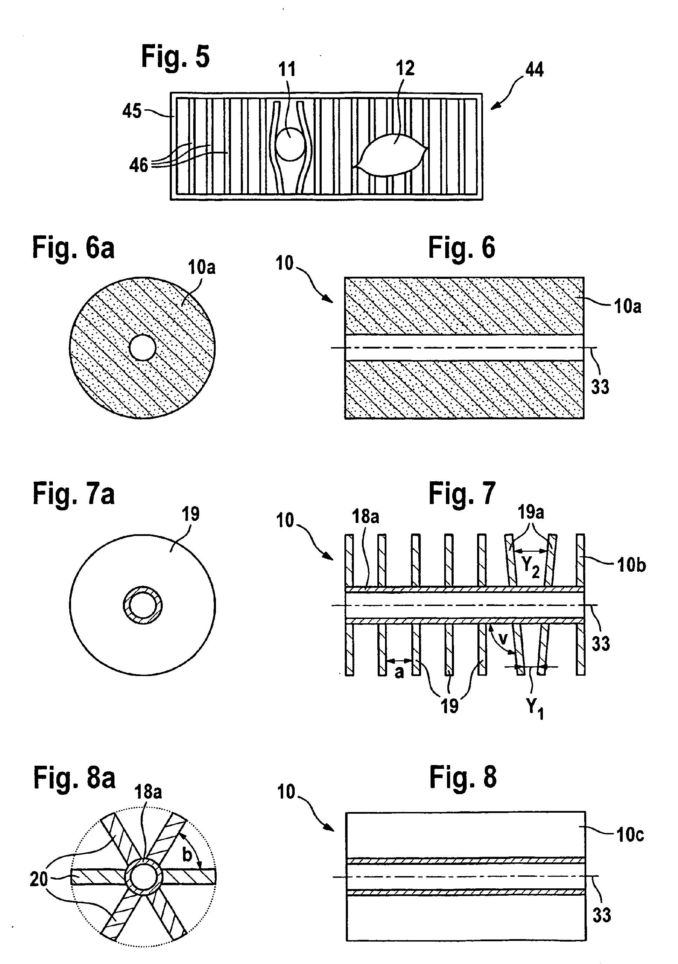

Wie die Fig. 6, 6a, 7, 7a und 8, 8a zeigen, sind unterschiedliche Gestaltungen der Aufnahmewalze 10 möglich. Im Ausführungsbeispiel nach Fig. 6 ist die Aufnahmewalze 10 als Schaumstoffwalze 10a gestaltet, wobei die Schaumstoffwalze 10a - wie Fig. 6a zeigt - aus Vollmaterial ohne Leerräume gestaltet ist. Die aufzunehmenden Früchte werden dabei auf den Wandabschnitt gewälzt, so daß sich eventuell anhaftender Schmutz löst.

Im Ausführungsbeispiel nach Fig. 7 ist die Aufnahmewalze 10 als Scheibenwalze 10b ausgebildet. Auf einem zentralen Wellenrohr 18a sind mit axialem Abstand a zueinander mehrere vorzugsweise elastische Scheiben 19 angeordnet, wobei die Scheiben bevorzugt gleiche Abstände a voneinander haben. Wie Fig. 7a zeigt, sind die Scheiben als Vollscheiben ausgebildet. Die Früchte werden zum Aufnehmen zwischen benachbarten Scheiben 19 geklemmt gehalten und längs des Wandabschnitts 34 beschleunigt und längs der Wurfhaube 36 in den Sammelkanal 29 gefördert. Die Scheibenwalze 10b nimmt dabei nut wenig Beifang auf.

Zur sicheren Aufnahme von Früchten unterschiedlicher Größe können die Scheiben 19a zweckmäßig unter einem von 90 Grad abweichenden Winkel v angeordnet werden. Benachbarte Scheiben 19a haben so über den Umfang in einem ersten Umfangsabschnitt einen kleinen Abstand Y₁ zur Aufnahme kleiner Früchte und über einen zweiten Umfangsabschnitt einen größeren Abstand Y₂ zur Aufnahme größerer Früchte.

Im Ausführungsbeispiel nach Fig. 8 ist die Aufnahmewalze 10 als Lamellenwalze 10c gestaltet. In Umfangsrichtung sind an einem zentralen Wellenrohr 18a Einzellamellen 20 vorgesehen, die sich - wie Fig. 8 zeigt - über die gesamte Breite des Wellenrohres 18a erstrecken. Über den Umfang verteilt sind mehrere mit gleichen Abständen b zueinanderliegende Lamellen 20 vorgesehen, wobei eine gerade Anzahl von Lamellen bevorzugt ist. Die aufzunehmenden Früchte werden von den bevorzugt elastischen Lamellen 20 vom Boden aufgeschabt bzw. über den Boden auf den Wandabschnitt 34 geschubst, wo sie dann von einer Lamelle 20 beschleunigt und längs der Wurfhaube 36 gefördert werden.

Im gezeigten Ausführungsbeispiel ist als Antrieb 13 ein am Ende 15 des Führungsstabes 7 angeordneter Verbrennungsmotor 21 kleineren Hubraums von weniger als 300 cm³ vorgesehen, der als Zweitaktmotor, als Viertaktmotor oder dgl. ausgebildet sein kann. Zur Bedienung des Verbrennungsmotors 21 ist im Bereich des Endes 15 ein Bediengriff 22 angeordnet, der einen Gashebel 23, eine Gashebelsperre 24 und weitere Bedienelemente 25 zum Betreiben des Verbrennungsmotors trägt. Ferner kann am Bediengriff 22 ein Hand- bzw. Fingerschutz 26 vorgesehen sein.

Zum Führen der erfindungsgemäßen Sammelvorrichtung ist es zweckmäßig, am Führungsstab 7 einen zweiten Griff für die zweite Hand des Benutzers 6 vorzusehen. Dieser ist im Ausführungsbeispiel als Bügelgriff 27 ausgebildet und dem Bediengriff 22 vorgelagert. Die eine Hand des Benutzers 6 greift den Bediengriff 22, während die andere Hand den Bügelgriff 27 umfaßt, so daß der Benutzer mit beiden Händen die Vorrichtung 1 sicher führen kann.

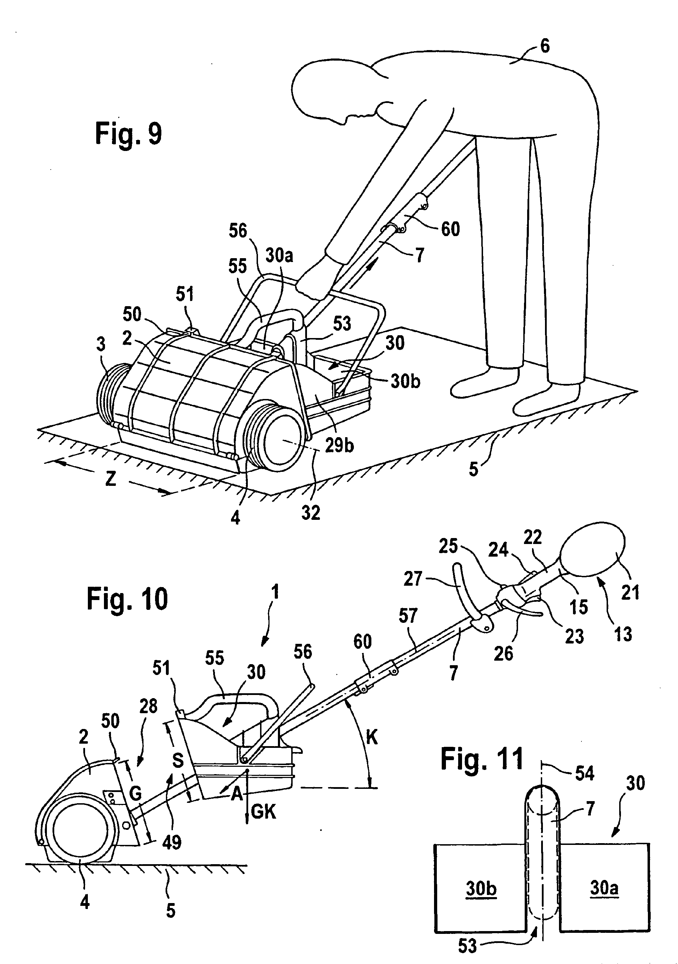

Das Gehäuse 2 ist - wie insbesondere die Fig. 4 und 10 zeigen - auf seiner dem Führungsstab 7 zugewandten Seite 28 im wesentlichen offen und wird durch einen an das Gehäuse 2 anzusetzenden, austauschbaren Sammelbehälter 30 geschlossen. Der Sammelbehälter 30 begrenzt den Walzenraum 9 und dient dem Auffangen der durch die Aufnahmewalze 10 in das Gehäuse 2 aufgenommenen Gegenstände 11, 12.

Um die Gegenstände 11, 12 vom Walzenraum 9 in den Sammelbehälter 30 zu überführen, ist ein Sammelkanal 29 ausgebildet, der sich im wesentlichen über die gesamte Breite der Aufnahmewalze 10 bzw. des Gehäuses 2 erstreckt. Der Sammelkanal 29 ist im gezeigten Ausführungsbeispiel in einem ersten Abschnitt 29a im Gehäuse 2 und in einem zweiten Abschnitt 29b im Sammelbehälter 30 ausgebildet. Der Sammelbehälter erstreckt sich dabei im wesentlichen über die Gesamthöhe H des Gehäuses 2 (Fig. 4) und ist im Bereich des Sammelkanals 29 durch ein Dach abgedeckt.

Die als Laufräder 3, 4 ausgebildeten Bodenstützen sind im Bereich der axialen Enden 31, 41 der Aufnahmewalze 10 angeordnet, wobei die Laufräder 3, 4 vorzugsweise eine gemeinsame Drehachse haben, die die Stützachse 32 bildet. Die Drehachse der Laufräder 3, 4 und die Drehachse 33 der Aufnahmewalze 10 (Fig. 4) liegen zueinander zweckmäßig etwa parallel und insbesondere eng benachbart. Damit soll erreicht werden, daß beim Schwenken des Gehäuses 2 um die Drehachse 32 der Bodenabstand w der Aufnahmewalze 10 im wesentlichen unverändert bleibt, so daß auch an Hängen oder in Bodensenken gute Aufnahmeeigenschaften erhalten bleiben. Bevorzugt fallen die Drehachse 32 der Laufräder 3, 4 und die Drehachse 33 der Aufnahmewalze 10 zusammen, liegen also gleichachsig zueinander.

Um eine gute Aufnahme der Früchte zu erzielen, ist zweckmäßig vorgesehen, daß der Durchmesser D1, D2 der Aufnahmewalze 10 etwa dem Durchmesser L der Laufräder 3, 4 entspricht. Es kann zweckmäßig sein, die Stützachse 32 bzw. die Drehachse der Laufräder 3, 4 relativ zur Drehachse 33 der Aufnahmewalze 10 verstellbar vorzusehen. Dadurch ist der Relativabstand w zwischen der Aufstandsfläche 70 der Bodenstütze 3, 4 und dem Außenmantel 71 der Aufnahmewalze 10 zueinander in einem Bereich von vorteilhaft bis zu +/-10 mm einstellbar. Bevorzugt ist die Lage der Aufnahmewalze 10 relativ zu den Bodenstützen bzw. Laufrädern einstellbar, so daß die Eingriffstiefe der Aufnahmewalze 10 zum Boden 5 den aufzunehmenden Früchten 11 angepaßt werden kann.

Wie Fig. 4 zeigt, liegt ein Wandabschnitt 34 etwa am Außendurchmesser der Aufnahmewalze 10 an bzw. ist der Außenkontur der Aufnahmewalze 10 angepaßt gestaltet. Der am Außendurchmesser der Aufnahmewalze 10 liegende Wandabschnitt 34 des Gehäuses 2 liegt bezogen auf den Benutzer 6 vorne und wirkt derart mit der Aufnahmewalze 10 zusammen, daß aufzunehmende Gegenstände 11, 12 von der Aufnahmewalze 10 entlang des vorderen Wandabschnitts 34 in Richtung auf den Sammelkanal 29 beschleunigt bzw. hochgeworfen werden. Die aufgenommenen Gegenstände 11, 12 werden so auf einer parabelförmigen Flugbahn 35 aus dem Walzenraum 9 über den Sammelkanal 29 in den Sammelbehälter 30 ausgeworfen. Der an den Wandabschnitt 34 anschließende Bereich des Gehäuses 2 ist als Leitabschnitt nach Art einer Wurfhaube 36 gewölbt gestaltet; dabei ist die Wurfhaube 36 der Form der Flugbahn 35 des aufzunehmenden Gegenstandes 11 angepaßt gestaltet und erstreckt sich vom vorderen Wandabschnitt 34 bogenförmig in Richtung auf den Sammelkanal 29 bzw. den Sammelbehälter 30.

Die Eintrittsöffnung 37 in den Sammelkanal 29 liegt in einem Bereich oberhalb der Aufnahmewalze 10, so wie dies in Fig. 4 dargestellt ist.

Die am Boden 5 liegenden Gegenstände 11 (Frucht) und 12 (Beifang wie Laub) werden von der Aufnahmewalze 10 erfaßt, wozu ein Eintrittsspalt 38 zwischen dem unteren Gehäuserand 39 und dem Boden 5 gebildet ist. Der Eintrittsspalt 38 ist so groß bemessen, daß die aufzusammelnden Gegenstände 11, 12 in den Wirkbereich der Walze 10 gelangen können, wobei die Aufnahmewalze 10 in Pfeilrichtung 40 dreht. Die Pfeilrichtung 40 entspricht der Transportrichtung der Gegenstände 11, 12 vom Wandabschnitt 34 über die Wurfhaube 36 hin zum Sammelkanal 29. Die Drehrichtung 40 ist daher derart gewählt, daß die Gegenstände 11, 12 auf einer Flugbahn 35 über die Aufnahmewalze 10 hinweg in den Sammelbehälter 30 gefördert werden.

Um ein sicheres Aufnehmen der Gegenstände 11, 12 im Bereich des Eintrittsspalts 38 zu gewährleisten, ist eine Aufnahmehilfe 42 vorgesehen, die in verschiedener Weise geeignet ausgebildet sein kann. In einem ersten Ausführungsbeispiel kann die Aufnahmehilfe als flexibler Lappen 43 gestaltet sein. Der flexible Lappen 43 läßt einen Zutritt der Gegenstände 11, 12 in den Wirkbereich der Aufnahmewalze 10 zu, verhindert aber ein Wiederausstoßen durch den Eintrittsspalt 38; die in den Wirkbereich der Aufnahmewalze 10 gelangenden Gegenstände werden aufwärts des Lappens 43 und längs des Wandabschnittes 34 in Richtung auf die gewölbte Wurfhaube 36 gefördert.

Es kann zweckmäßig sein, als Aufnahmehilfe 42 einen Aufnahmekeil 43a anzuordnen, der insbesondere bei einer Häufung von Gegenstände 11 wirkt und deren Vereinzelung erzwingt, bevor ein Zutritt in den Bereich der Aufnahmewalze 10 möglich ist. Der Aufnahmekeil 43a kann als einfaches Gummi-Hohlprofil oder auch als Schaumstoffkeil ausgebildet sein. Insbesondere bei der Aufnahme größerer Früchte ist ein Keil vorteilhaft. Entweder verformt er sich so weit, bis die größere Frucht in den Wirkbereich der Aufnahmewalze 10 eintreten kann oder aber er gleitet auf die Frucht auf, hebt somit das Gehäuse der Vorrichtung an, damit die Frucht eintreten kann.

Zwischen dem Walzenraum 9 und dem Sammelbehälter 30 ist zur Selektierung der Gegenstände 11, 12 in Früchte 11 und Beifang 12 eine Separiereinrichtung vorgesehen, die zweckmäßig aus einer mechanischen Barriere 44 besteht. In einem ersten Ausführungsbeispiel, wie es in Fig. 5 dargestellt ist, besteht die mechanische Barriere 44 aus einem Bürstenrahmen 45, dessen Borsten 46 den leichteren Beifang 12 zurückhalten, die schwereren Früchte 11 aber passieren lassen. Ein derartiger Bürstenrahmen 45 kann an der Eintrittsöffnung 37 des Sammelkanals 29 im Gehäuse 2 vorgesehen sein, so wie dies in Fig. 4 eingezeichnet ist.

In einer anderen Ausgestaltung einer Separiereinrichtung in Form einer mechanischen Barriere 44 ist eine Trennwand 47 vorgesehen, die sich über die gesamte Breite des Sammelkanals 29 erstreckt und zweckmäßig in der Ebene zwischen dem Sammelbehälter 30 und dem Gehäuse 2 angeordnet sein kann. Diese Trennwand 47 läßt im Endbereich der Wurfhaube 36 einen schmalen Separierspalt 48 offen, durch den die entlang der Wurfhaube 36 geworfenen Früchte 11 in den Sammelbehälter 30 übertreten können. Der leichtere Beifang 12 hat eine andere, niedrigere Wurfparabel und prallt auf die Trennwand 47, um dann nach unten aus dem Gehäuse 2 herauszufallen. Die Trennwand 47 ist zur Einstellung der Separierwirkung gemäß dem Doppelpfeil verstellbar, wodurch der Separierspalt 48 einstellbar ist. Auch andere mechanische Barrieren in Form von Kettenvorhängen, Schikanen oder dgl. können zweckmäßig sein.

Der Sammelbehälter 30 schließt die dem Führungsstab 7 zugewandte offene Seite 28 des Gehäuses 2, wobei die Höhe S der Anschlußseite des Sammelbehälters 30 und die Höhe G der Seite 28 des Gehäuses 2 etwa gleich sind. Die zugewandten Seiten 28 und 49 liegen deckungsgleich aufeinander, wobei der im Sammelbehälter 30 ausgebildete zweite Abschnitt 29b lagerichtig an den ersten Abschnitt 29a des Sammelkanals 29 anschließt.

Der Sammelbehälter 30 ist am Gehäuse 2 nicht nach Art einer Verschraubung oder dgl. befestigt, sondern er liegt unter Wirkung der Schwerkraft an der offenen Gehäuseseite 28 an. Zur lagerichtigen Anlage sind am Gehäuse 2 im Bereich des oberen Randes der Wurfhaube 36 Zentrierelemente 50 vorgesehen. Wie die Fig. 3 und 9 zeigen, ist jeweils ein Zentrierelemente 50 auf einer Längsseite des Führungsstabes 7 vorgesehen. Die Zentrierelemente 50 greifen in Aufnahmen 51 am oberen Rand 52 des Sammelbehälters 30 ein und gewährleisten so eine lagerichtige Anlage und drehfeste Festlegung. Die Zentrierelemente 50 und die Aufnahmen 51 bilden ein Pendellager 63.

Wie die Fig. 9 bis 11 zeigen, ist der Sammelbehälter 30 auf den Führungsstab 7 aufgesetzt und übergreift diesen. Hierzu ist im Sammelbehälter 30 eine U-förmige Aufnahme 53 vorgesehen, die den Sammelbehälter 30 in Teilbehälter 30a und 30b unterteilt. Dabei liegt die U-förmige Aufnahme 53 mittig zwischen den Teilbehältern 30a und 30b. Der Sammelbehälter 30 ist symmetrisch zu einer die U-förmige Aufnahme 53 teilenden Mittelebene 54 ausgebildet. Zum leichteren Tragen und Bewegen des Sammelbehälters 30 sind zwei Griffe 55 und 56 vorgesehen, wobei der Griff 55 die U-förmige Aufnahme 53 mit dem vorderen Gehäuserand 52 verbindet. Der Griff 55 liegt - in Draufsicht - in der Mittelebene 54. Der zweite, verschwenkbare Griff 56 ist an den äußeren Seitenwänden der Teilbehälter 30a und 30b befestigt und dient in erster Linie dem Lösen eines vollen Sammelbehälters vom Gehäuse 2.

Die konstruktive Ausgestaltung ist so gewählt, daß der Schwerpunkt des Sammelbehälters 30 auf der Längsmittelebene 54 des Sammelbehälters 30, vorzugsweise auch auf der Längsmittelachse 57 des Führungsstabes 7 liegt.

Zum Ansetzen des Sammelbehälters 30 an das Gehäuse 2 muß der Sammelbehälter 30 lediglich auf den Führungsstab 7 aufgesetzt werden, wobei der Führungsstab 7 - sofern er vom Benutzer gehalten wird - unter einem Winkel K zum Boden 5 liegt. Die Gewichtskraft GK des Sammelbehälters 30 bewirkt dabei eine in Richtung des Führungsstabes 7 verlaufende Anlagekraft A, so daß der in Fig. 10 oberhalb des Gehäuses 2 auf den Führungsstab 7 aufgesetzte Sammelbehälter 30 unter Wirkung der Teilgewichtskraft A abwärts zum Gehäuse gleitet. Da - bei leerem Sammelbehälter - der Schwerpunkt auf der Längsmittelachse 57 bzw. unterhalb dieser liegt, richtet sich der Sammelbehälter 30 aufgrund seiner symmetrischen Gestaltung lagerichtig zur offenen Gehäuseseite 28 des Gehäuses 2 aus, so daß beim Abwärtsgleiten die Zentrierelemente 50 in die Aufnahmen 51 greifen und die Drehlage des Sammelbehälters 30 zum Gehäuse 2 fixieren. Der auf dem Führungsstab 7 verschiebbare, um die Längsmittelachse 57 schwenkbare Sammelbehälter 30 ist durch die Zentrierelemente 50 in den Aufnahmen 51 drehfest gesichert und aufgrund der wirkenden Teilgewichtskraft A an der offenen Gehäuseseite 28 gehalten.

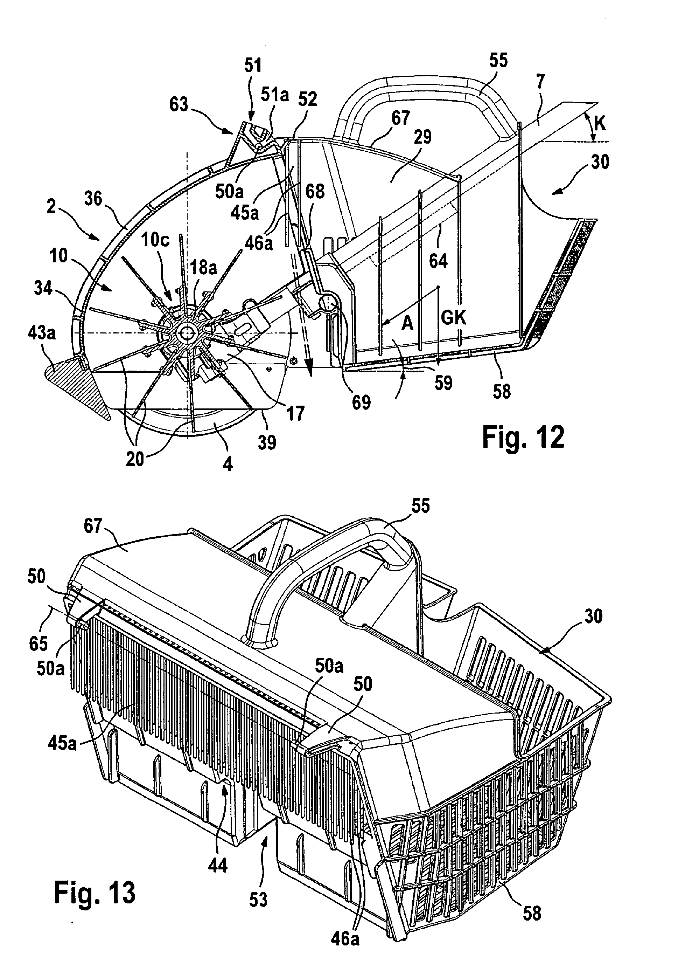

In den Darstellungen nach den Fig. 12 bis 15 ist das Pendellager 63 zu erkennen, wobei am oberen Rand des Sammelbehälters 30 die Zentrierelemente 50 vorgesehen sind, die aus kurzen Zapfen 50a bestehen, deren freie Enden aufeinander zu weisen. Die Aufnahme 51 besteht aus einer U-förmigen, an beiden Enden offenen Nut 51a, die dem Zapfen 50a zugewandt liegt.

Wird der Sammelbehälter 30 auf den Führungsstab 7 aufgesetzt, so wird aufgrund des Winkels K zum Boden die Gewichtskraft GK eine Richtungskomponente A in Richtung auf das Gehäuse 2 bewirken, durch die der pendelnd auf dem Führungsstab 7 aufgesetzte Sammelbehälter 30 abwärts rutscht. Um ein sauberes Einfädeln der Zapfen 50a der Zentrierelemente 50 in die U-förmigen Nuten 51a der Aufnahmen 51 zu gewährleisten, ist im unteren Bereich des Führungsstabes 7 eine Führungsschiene 64 befestigt, die die Drehlage des Sammelbehälters 30 auf dem Führungsstab 7 festlegt. Aufgrund der Führungsschiene 64 gleitet der Sammelbehälter 30 mit seinen Zapfen 50a lagerichtig in die beiden Aufnahmen 51 rechts und links des mittigen Führungsstabes 7 ein, so daß der Sammelbehälter 30 lagerichtig am Gehäuse 2 gehalten ist.

Dieser ohne separat zu betätigende Befestigungselemente ausgeführte Anschluß des Sammelbehälters 30 am Gehäuse 2 stellt sicher, daß bei Kräften auf den Sammelbehälter 30 dieser selbst ausweichen kann um Beschädigungen zu vermeiden. Zweckmäßig liegt der Boden 58 des Sammelbehälters 30 in seiner Anschlußlage des am Gehäuse 2 unter einem Winkel 59 zum unteren Gehäuserand 39, so daß sich ein zum Benutzer ansteigender Boden 58 des Sammelbehälters 30 ergibt. Dies gibt dem Benutzer mehr Bewegungsraum beim Aufnehmen von Früchten an Hängen oder dgl.

Legt der Benutzer den Führungsstab 7 am Boden ab, sitzt zunächst der Boden 58 des Sammelbehälters 30 auf dem Erdboden auf. Bei einem weiteren Verschwenken das Führungsstabes 7 auf den Erdboden zu bewegt sich das Gehäuse 2 relativ zum Sammelbehälter 30. Aufgrund der U-Nut 51a in der Aufnahme 51 kann der Zapfen 50a längs der U-Nut ausweichen und am anderen, oberen Ende der Aufnahme 51 austreten. Eine Beschädigung der Fixierung des Sammelbehälters 30 am Gehäuse 2 ist vermieden. Der Sammelbehälter 30 kann um die durch die Zapfen 50a und die Aufnahme 51 definierte Pendelachse 65 schwenken.

Wie Fig. 12 zeigt, besteht die Lamellenwalze 10c aus einem steifen, sternförmigen, angetriebenen Grundkörper 18a, an dessen Rippen die flexiblen Lamellen 20 befestigt sind. Im gezeigten Ausführungsbeispiel ist die Aufnahmehilfe 42 ein Schaumstoffkeil 43a. Die Wurfhaube 36 ist der Flugbahn eines aufzunehmenden Gegenstandes angepaßt ausgebildet und leitet diesen in Richtung auf den Sammelbehälter 30. Die einen Leitabschnitt bildende Wurfhaube 36 schließt unmittelbar an den die Gegenstände aufnehmenden Wandabschnitt 34 an.

Im gezeigten Ausführungsbeispiel endet die Leitwand der Wurfhaube 36 unmittelbar am Eintritt des Sammelkanals 29, der im Ausführungsbeispiel nach Fig. 12 ausschließlich am Sammelbehälter 30 ausgebildet ist. Hierzu ist der Sammelbehälter 30 über einen Teilbereich mit einem Dach 67 abgedeckt.

Am Eintritt des Sammelbehälters ist ein Vorhang 45a aus Rundschnüren 46a gebildet, die - wie insbesondere Fig. 12 zeigt - in Flugrichtung der Gegenstände in zwei Reihen hintereinander angeordnet sind. Die Rundschnüre 46a sind an einem Ende im Bereich des Daches 67 festgelegt und hängen unter Wirkung der Gewichtskraft etwa senkrecht nach unten.

Die Rundschnüre 46a enden vor der unteren Kante 68 des Sammelkanals 29, so daß am Vorhang 45a zurückgehaltener Beifang nach unten aus dem Gehäuse austreten kann, wie durch den strichlierten Pfeil angedeutet.

Der Sammelbehälter 30 stützt sich unterhalb der Führungsstange 7 nahe dem Getriebe 17 an einer Querstange 69 ab, wobei das Gehäuse des Sammelbehälters 30 derart ausgebildet ist, daß es leicht auf der Querstange 69 aufsitzt.

Wie die Fig. 13 bis 15 zeigen, ist der Boden 58 des Sammelbehälters nach Art eines Gitterrostes ausgebildet, so daß trotz der mechanischen Barriere 44 durch den Vorhang 45a eintretender Beifang durch das Gitter wieder austreten kann. Auf diese Weise werden im Sammelbehälter 30 überwiegend die aufzunehmenden Früchte gesammelt und der Anteil an Beifang ist gering. Bevorzugt sind auch die Seitenwände des Sammelbehälters 30 nach Art eines Gitters gestaltet, so daß bis auf die dem Gehäuse 2 zugewandte Frontwand und das Dach 67 des Sammelbehälters alle Wandbereiche gitterrostartig gestaltet sind. Die gitterrostartige Gestaltung kann auch als Separiereinrichtung genutzt werden, die allein oder zusätzlich zur mechanischen Barriere 44 angeordnet werden kann.

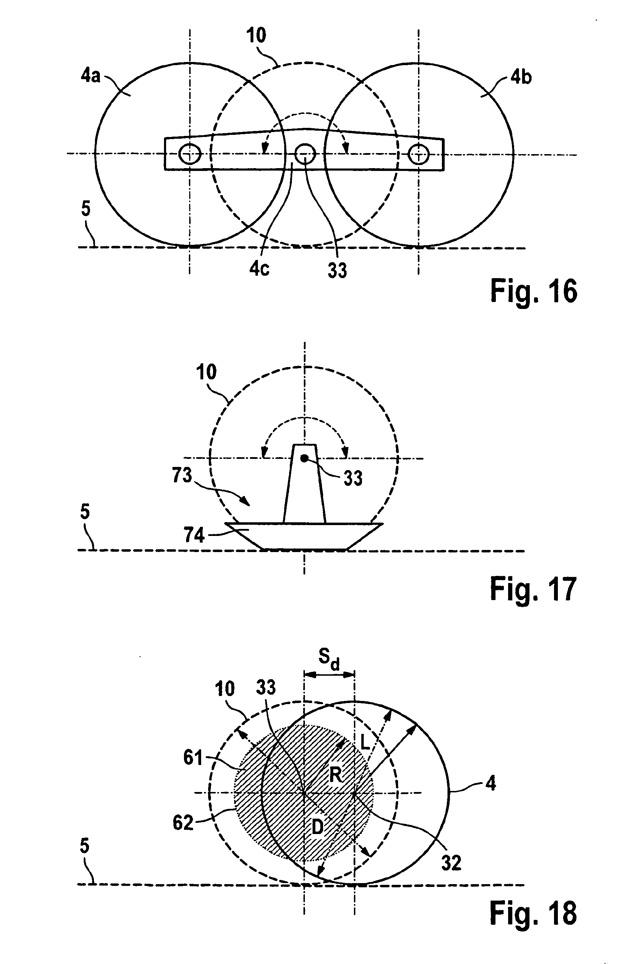

Im Ausführungsbeispiel nach Fig. 16 sind als Bodenstützen an einem axialen Ende der Aufnahmewalze 10 zwei Laufräder 4a, 4b angeordnet, die an einer gemeinsamen Schwinge 4c drehbar gehalten sind. Die Schwinge ist auf der Welle der Aufnahmewalze 10 schwenkbar gehalten, wodurch eine gute Beweglichkeit bei guter Geländegängigkeit gegeben ist.

Im Ausführungsbeispiel nach Fig. 17 ist die Aufnahmewalze 10 durch eine Bodenstütze 73 gegen den Boden 5 abgestützt, wobei die Bodenstütze 73 als Kufe 74 gestaltet ist. Die Kufe 74 ist drehfest an der Vorrichtung festgelegt, so daß der Früchtesammler ähnlich einem Schlitten über den Boden 5 geführt werden kann.

Im Ausführungsbeispiel nach Fig. 18 ist eine Aufnahmewalze 10 mit im Durchmesser gleichem Laufrad 4 gezeigt, welches am axialen Ende der Aufnahmewalze 10 gehalten ist. Die Vorrichtung ist dabei so gestaltet, daß die die Drehachse des Laufrades 4 bildende Stützachse 32 mit einem Abstand S_{d} zur Drehachse 33 der Aufnahmewalze 10 liegt, wobei der Abstand S_{d} kleiner als der Durchmesser D der Aufnahmewalze 10 ist. Bevorzugt liegt die Stützachse 32 bzw. die Drehachse des Laufrades 4 in einem Raumbereich 61, der durch einen Kreis 62 mit dem Radius R um die Drehachse 33 der Aufnahmewalze 10 bestimmt ist. Der Radius R des Kreises 62 ist dabei kleiner als das 0,4-fache des Durchmessers D der Aufnahmewalze.

Zweckmäßig ist der Sammelbehälter 30 nach oben offen, so daß der Benutzer 6 jederzeit durch Sichtkontrolle feststellen kann, ob ein Leeren des Behälters notwendig ist. Dabei kann für ein unterbrechungsloses Arbeiten eine Hilfsperson den Sammelbehälter 30 einfach und schnell abnehmen und durch einen leeren ersetzen, ohne daß Stillstandszeiten durch Lösen oder Schließen von Befestigungsmitteln auftreten.

Die erfindungsgemäße Vorrichtung hat eine Arbeitsbreite Z (Fig. 9), die zweckmäßig kleiner als 800 mm ist, vorzugsweise etwa 400 mm beträgt. Ein derartiges Gerät ist handlich und leicht bewegbar, so daß auch in unwegsamen Gelände ein sicheres Aufnehmen von Früchten möglich ist.

Bevorzugt ist der Führungsstab als geteilter Führungsstab gestaltet, der über eine Klemmkupplung 60 zusammengesetzt ist. Dadurch wird die Möglichkeit geschaffen, den oberen Abschnitt des Führungsstabes 7 mit dem Antrieb 13 auch für andere, an die Klemmkupplung 60 anzuschließende Geräte zu nutzen.

## Patentansprüche

1. Handgeführte Vorrichtung zum Aufnehmen von Gegenständen, insbesondere von Früchten wie Äpfeln, Nüssen, Kastanien, Oliven, Kaffeekirschen oder dgl., bestehend aus einem Gehäuse (2), welches am Boden (5) abgestützt geführt ist und mittels einer Handhabe (7) in einer Arbeitsrichtung (8) zu bewegen ist, mit einem im Gehäuse (2) ausgebildeten Walzenraum (9), in dem eine Aufnahmewalze (10) zum Aufnehmen der Gegenstände (11, 12) drehbar gelagert ist, wobei die Aufnahmewalze (10) etwa quer zur Arbeitsrichtung (8) angeordnet liegt und von einem Antrieb (13) rotierend angetrieben ist, und mit einem Sammelbehälter (30) zum Auffangen der aufgenommenen Gegenstände (11, 12), wobei die aufgenommenen Gegenstände (11, 12) auf einer Flugbahn (35) aus dem Walzenraum (9) in den Sammelbehälter (30) ausgeworfen werden,
wobei im Bereich der Enden (31, 41) der Aufnahmewalze (10) eine Bodenstütze (3, 4) angeordnet ist, und wobei über die Breite der Aufnahmewalze (10) ein Wandabschnitt (34) des Gehäuses (2) etwa auf Höhe des Außendurchmessers der Aufnahmewalze (10) liegt, und vom Gehäuse (2) zum Sammelbehälter (30) ein Sammelkanal (29) ausgebildet ist, über den aufgenommene Gegenstände (11, 12) in den Sammelbehälter (30) ausgeworfen werden, wobei der Wandabschnitt (34) des Gehäuses (2) und die Aufnahmewalze (10) derart miteinander zusammenwirken, daß aufzunehmende Gegenstände (11, 12) von der Aufnahmewalze (10) entlang des Wandabschnittes (34) in Richtung auf den Sammelkanal (29) beschleunigt werden und die Handhabe als Führungsstab (7) ausgebildet ist, der vorzugsweise mittig aus dem Gehäuse (2) herausragt, **dadurch gekennzeichnet, daß** der Führungsstab (7) als Führungsrohr (7a) für eine Antriebswelle (7b) ausgebildet ist, wobei der Antrieb (13) an dem einen Ende (15) des Führungsstabes (7) und die angetriebene Aufnahmewalze (10) an dem anderen Ende (16) des Führungsstabes (7) angeordnet ist.

2. Vorrichtung nach Anspruch 1,
**dadurch gekennzeichnet, daß** die Bodenstützen (3, 4) eine gemeinsame Stützachse (32) haben, wobei die Stützachse (32) und die Drehachse (33) der Aufnahmewalze (10) etwa parallel zueinander benachbart liegen.

3. Vorrichtung nach Anspruch 1,
**dadurch gekennzeichnet, daß** der Wandabschnitt (34) in einen Leitabschnitt übergeht, der als gewölbte Wurfhaube (36) ausgebildet ist und die Wölbung der Wurfhaube (36) dem Verlauf einer parabelförmigen Flugbahn (35) des aufzunehmenden Gegenstandes (11) angepaßt ausgebildet ist.

4. Vorrichtung nach Anspruch 1,
**dadurch gekennzeichnet, daß** die Drehrichtung der Aufnahmewalze (10) derart ist, daß die Gegenstände (11,12) auf einer Flugbahn (35) über die Aufnahmewalze (10) hinweg in den Sammelbehälter (30) gefördert werden.

5. Vorrichtung nach einem der Ansprüche 1 bis 4,
**dadurch gekennzeichnet, daß** die Stützachse (32) mit einem Abstand (Sd) zur Drehachse (33) der Aufnahmewalze (10) liegt, der kleiner als der Durchmesser (D1, D2) der Aufnahmewalze (10) ist, wobei die Stützachse (32) in einem Raumbereich (61) liegt, der durch einen Kreis (62) mit dem Radius (R) kleiner als das 0,4-fache des Durchmessers (D) der Aufnahmewalze (10) um die Drehachse (33) der Aufnahmewalze (10) gebildet ist.

6. Vorrichtung nach einem der Ansprüche 1 bis 5,
**dadurch gekennzeichnet, daß** die Stützachse (32) der Bodenstützen (3, 4) und die Drehachse (33) der Aufnahmewalze (10) eng nebeneinander liegen oder zusammenfallen.

7. Vorrichtung nach einem der Ansprüche 1 bis 6,
**dadurch gekennzeichnet, daß** die Stützachse (32) und die Drehachse (33) der Aufnahmewalze (10) relativ zueinander verstellbar sind.

8. Vorrichtung nach Anspruch 1,
**dadurch gekennzeichnet, daß** die Bodenstützen drehbar als Laufräder (3,4) ausgebildet sind, wobei die Stützachse (32) die Drehachse der Laufräder (3, 4) bildet und der Durchmesser (L) der Laufräder (3, 4) etwa dem Durchmesser (D1, D2) der Aufnahmewalze (10) entspricht.

9. Vorrichtung nach einem der Ansprüche 1 bis 8,
**dadurch gekennzeichnet, daß** die Aufstandsfläche (70) der Bodenstütze (3, 4) und der Außenmantel (71) der Aufnahmewalze (10) zueinander einen Relativabstand (w) von bis zu +/- 10 mm aufweisen.

10. Vorrichtung nach einem der Ansprüche 1 bis 9,
**dadurch gekennzeichnet, daß** die Arbeitsbreite (Z) der Vorrichtung (1) kleiner als 800 mm, vorzugsweise etwa 400 mm ist.

11. Vorrichtung nach Anspruch 1,
**dadurch gekennzeichnet, daß** der mit der Aufnahmewalze (10) zusammenwirkende Wandabschnitt (34) an seiner dem Boden (5) zugewandten Gehäusekante (39) einen Eintrittsspalt (38) begrenzt, und eine Aufnahmehilfe (42) im Bereich des Eintrittsspaltes (38) vorgesehen ist, die vorzugsweise als flexibles Hohlprofil (43a) oder Schaumstoffkeil ausgebildet ist.

12. Vorrichtung nach Anspruch 1,
**dadurch gekennzeichnet, daß** die Aufnahmewalze (10) als Schaumstoffwalze (10a) ausgebildet ist und die aufzunehmenden Gegenstände (11, 12) eingewälzt werden.

13. Vorrichtung nach Anspruch 1,
**dadurch gekennzeichnet, daß** die Aufnahmewalze (10) als Scheibenwalze (10b) ausgebildet ist und die aufzunehmenden Gegenstände (11, 12) geklemmt aufgenommen werden, wobei nebeneinander liegende Scheiben (19a) der Scheibenwalze (10c) in einem Winkel (v) zueinander angeordnet sind.

14. Vorrichtung nach Anspruch 1,
**dadurch gekennzeichnet, daß** die Aufnahmewalze (10) als Lamellenwalze (10c) ausgebildet ist und die aufzunehmenden Gegenstände (11, 12) eingeschabt werden.

15. Vorrichtung nach einem der Ansprüche 1 bis 14,
**dadurch gekennzeichnet, daß** die Aufnahmewalze (10) aus zwei etwa gleichen Walzenabschnitten zusammengesetzt ist, zwischen denen ein vorzugsweise die Walzenwelle (18) antreibendes Getriebe (17) angeordnet ist.

16. Vorrichtung nach einem der Ansprüche 1 bis 15,
**dadurch gekennzeichnet, daß** das Gehäuse (2) auf der der Handhabe (7) zugewandten Seite (28) durch den anzusetzenden Sammelbehälter (30) zu verschließen ist, wobei der Sammelbehälter (30) den Walzenraum (9) begrenzt und vorzugsweise der Sammelbehälter (30) auf den Führungsstab (7) aufgesetzt ist und diesen zumindest teilweise übergreift.

17. Vorrichtung nach Anspruch 16,
**dadurch gekennzeichnet, daß** der Führungsstab (7) in einer U-förmigen Aufnahme (53) des Sammelbehälters (30) liegt, wobei der Schwerpunkt des Sammelbehälters (30) auf seiner Längsmittelebene (54) liegt, die die U-förmige Aufnahme (53) symmetrisch teilt und der Sammelbehälter (30) unter Wirkung einer Teilgewichtskraft (A) am Gehäuse (2) anliegt sowie über Zentrierelemente (50) am Gehäuse (2) positioniert ist.

18. Vorrichtung nach Anspruch 16 oder 17,
**dadurch gekennzeichnet, daß** der Führungsstab (7) eine Führungsschiene (64) aufweist, die den aufgesetzten Sammelbehälter (30) lagerichtig dem Gehäuse (2) zuführt.

19. Vorrichtung nach einem der Ansprüche 16 bis 18,
**dadurch gekennzeichnet, daß** die Zentrierelemente (50) Teil eines Pendelgelenkes (63) mit einer zur Drehachse (33) der Aufnahmewalze (10) etwa parallelen Pendelachse (65) sind.

20. Vorrichtung nach einem der Ansprüche 1 bis 19,
**dadurch gekennzeichnet, daß** die Eintrittsöffnung (37) in den Sammelkanal (29) etwa oberhalb der Aufnahmewalze (10) liegt.

21. Vorrichtung nach Anspruch 1,
**dadurch gekennzeichnet, daß** zur Trennung der aufzunehmenden Gegenstände (11) von Beifang (12) eine Separiereinrichtung angeordnet ist, die von einer mechanischen Barriere (44) gebildet ist und vorzugsweise vor der Aufnahmewalze (10) angeordnet ist.

22. Vorrichtung nach Anspruch 21,
**dadurch gekennzeichnet, daß** die Separiereinrichtung aus einem Rost oder Gitter aus nebeneinander liegenden Längsstäben gebildet ist, die sich vorzugsweise in Arbeitsrichtung (8) erstrecken wobei zwischen benachbarten Längsstäben ein Separierspalt ausgebildet ist.

23. Vorrichtung nach Anspruch 21,
**dadurch gekennzeichnet, daß** die Separiereinrichtung zwischen dem Walzenraum (9) und dem Sammelbehälter (30) angeordnet ist und vorzugsweise aus einer Trennwand (47), einer Bürste (45) oder einem Vorhang (45a) besteht.

## Claims

1. Hand-guided device for collecting objects, in particular fruit such as apples, nuts, chestnuts, olives, coffee berries or the like, comprising a housing (2) supported and guided on the ground (5) and moved in an operating direction (8) by means of a handle (7), with a roller chamber (9) wherein a pick-up roller (10) for collecting the objects (11, 12) is rotatably mounted being formed in the housing (2), wherein the pick-up roller (10) is arranged at approximately right angles to the operating direction (8) and is driven to rotate by a drive (13), and with a collecting basket (30) for catching the collected objects (11, 12), wherein the collected objects (11, 12) are thrown from the roller chamber (9) into the collecting basket (30) along a trajectory (35), wherein a ground support (3, 4) is provided in the region of the ends (31, 41) of the pick-up roller (10) and wherein a wall section (34) of the housing (2) lies approximately at the level of the outer diameter of the pick-up roller (10) across the width of the pick-up roller (10) and a collecting channel (29) through which collected objects (11, 12) are thrown into the collecting basket (30) is provided from the housing (2) to the collecting basket (30), wherein the wall section (34) of the housing (2) and the pick-up roller (10) act together such that objects (11, 12) to be collected are accelerated by the pick-up roller (10) towards the collecting channel (29) along the wall section (34) and wherein the handle is designed as a guide bar (7) which preferably projects centrally from the housing (2),
**characterised in that** the guide bar (7) is designed as a guide tube (7a) for a drive shaft (7b), the drive (13) being mounted at one end (15) of the guide bar (7) and the pick-up roller (10) being mounted at the other end (16) of the guide bar (7).

2. Device according to claim 1,
**characterised in that** the ground supports (3, 4) have a common support axis (32), the support axis (32) and the axis of rotation (33) of the pick-up roller (10) being approximately parallel to one another.

3. Device according to claim 1,
**characterised in that** the wall section (34) merges into a baffle section designed as a curved throw hood (36) and **in that** the curvature of the throw hood (36) is matched to the curve of a parabolic trajectory (35) of the object (11) to be collected.

4. Device according to claim 1,
**characterised in that** the axis of rotation of the pick-up roller (10) is designed such that the objects (11, 12) are conveyed along a trajectory (35) above the pick-up roller (10) into the collecting basket (30).

5. Device according to any of claims 1 to 4,
**characterised in that** a distance (Sd) of the support axis (32) from the axis of rotation (33) of the pick-up roller (10) is less than the diameter (D1, D2) of the pick-up roller (10), the support axis (32) lying in a region (61) defined by a circle (62) surrounding the axis of rotation (33) of the pick-up roller (10) and having a radius (R) smaller than 0.4 times the diameter (D) of the pick-up roller (10).

6. Device according to any of claims 1 to 5,
**characterised in that** the support axis (32) of the ground supports (3, 4) and the axis of rotation (33) of the pick-up roller (10) are close to one another or coincide.

7. Device according to any of claims 1 to 6,
**characterised in that** the support axis (32) and the axis of rotation (33) of the pick-up roller (10) are adjustable relative to one another.

8. Device according to claim 1,
**characterised in that** the ground support are designed rotatable and act as wheels (3, 4), the support axis (32) forming the axis of rotation of the wheels (3, 4) and the diameter (L) of the wheels (3, 4) approximately corresponding to the diameter (D1, D2) of the pick-up roller (10).

9. Device according to any of claims 1 to 8,
**characterised in that** the contact area (70) of the ground supports (3, 4) and the outer casing (71) of the pick-up roller (10) have a mutual relative distance (w) of up to +/- 10 mm.

10. Device according to any of claims 1 to 9,
**characterised in that** the operating width (Z) of the device (1) is less than 800 mm, preferably approximately 400 mm.

11. Device according to claim 1,
**characterised in that** the wall section (34) acting together with the pick-up roller (10) defines an entry gap (38) at its housing edge (39) facing the ground (5), and **in that** a pick-up aid (42) is provided in the region of the entry gap (38), said pick-up aid being preferably designed as a flexible hollow section (43a) or as a foam wedge.

12. Device according to claim 1,
**characterised in that** the pick-up roller (10) is designed as a foam roller (10a) and **in that** the objects (11, 12) to be collected are rolled in.

13. Device according to claim 1,
**characterised in that** the pick-up roller (10) is designed as a disc roller (10b) and **in that** the objects (11, 12) to be collected are picked up with a clamping action, adjacent discs (19a) of the disc roller (10b) being arranged at an angle (v) to one another.

14. Device according to claim 1,
**characterised in that** the pick-up roller (10) is designed as a lamellar roller (10c) and **in that** the objects (11, 12) to be collected are scraped in.

15. Device according to any of claims 1 to 14,
**characterised in that** the pick-up roller (10) is composed of two approximately equal roller sections between which a gearbox (17) preferably driving the roller shaft (18) is provided.

16. Device according to any of claims 1 to 15,
**characterised in that** the housing (2) can be closed on the side (28) adjacent to the handle (7) by fitting a collecting basket (30), the collecting basket (30) bounding the roller chamber (9) and the collecting basket (30) being preferably fitted to the guide bar (7) and at least partially overlapping it.

17. Device according to claim 16,
**characterised in that** the guide bar (7) lies in a U-shaped location (53) of the collecting basket (30), wherein the centre of gravity of the collecting basket (30) lies on its longitudinal central plane (30) and symmetrically divides the U-shaped location (53) and wherein the collecting basket (30) bears against the housing (2) under the action of a partial weight (A) and is positioned on the housing (2) by way of centring elements (50).

18. Device according to claim 16 or 17,
**characterised in that** the guide bar (7) is provided with a guide rail (64) which feeds the fitted collecting basket (30) towards the housing (2) in the correct position.

19. Device according to any of claims 16 to 18,
**characterised in that** the centring elements (50) are part of an oscillating joint (63) with an oscillating axis (65) approximately parallel to the axis of rotation (33) of the pick-up roller (10).

20. Device according to any of claims 1 to 19,
**characterised in that** the entry opening (37) into the collecting channel (29) lies approximately above the pick-up roller (10).

21. Device according to claim 1,
**characterised in that** a separating device represented by a mechanical barrier (44) and preferably located in front of the pick-up roller (10) is provided to separate the objects (11) to be collected from inadvertently collected material (12).

22. Device according to claim 21,
**characterised in that** the separating device is represented by a grating or grid composed of longitudinal bars placed adjacent to one another and preferably extending in the operating direction (8), a separating gap being formed between adjacent longitudinal bars.

23. Device according to claim 21,
**characterised in that** the separating device is located between the roller chamber (9) and the collecting basket (30) and preferably comprises a partition (47), a brush (45) or a curtain (45a).

## Revendications

1. Dispositif guidé à la main pour ramasser des objets, en particulier des fruits tels que des pommes, des noix, des châtaignes, des olives, des cerises de café, etc., composé d'un carter (2) qui est guidé en étant en appui sur le sol (5) et qui peut être déplacé à l'aide d'une poignée (7) dans un sens de travail (8), avec un espace de cylindre (9) qui est formé dans ledit carter (2) et dans lequel un cylindre de ramassage (10) destiné à ramasser les objets (11, 12) est monté en rotation, le cylindre de ramassage (10) étant disposé à peu près transversalement par rapport au sens de travail (8) et étant entraîné en rotation par un entraînement (13), et avec un récipient collecteur (30) qui est destiné à recueillir les objets (11, 12) ramassés, étant précisé que les objets (11, 12) ramassés sont éjectés de l'espace de cylindre (9) vers le récipient collecteur (30) sur une trajectoire (35), qu'il est prévu dans la zone des extrémités (31, 41) du cylindre de ramassage (10) un support au sol (3, 4), qu'une partie de paroi (34) du carter (2) se trouve à peu près à la hauteur du diamètre extérieur du cylindre de ramassage (10), sur la largeur dudit cylindre (10), qu'il est prévu du carter (2) au récipient collecteur (30) un conduit collecteur (29) par lequel les objets (11, 12) ramassés sont éjectés dans le récipient collecteur (30), que la partie de paroi (34) du carter (2) et le cylindre de ramassage (10) coopèrent de telle sorte que les objets (11, 12) à ramasser soient soumis par le cylindre de ramassage (10) à une accélération le long de la partie de paroi (34) en direction du conduit collecteur (29), et que la poignée est conçue comme une barre de guidage (7) qui dépasse du carter (2) de préférence de manière centrée,
**caractérisé en ce que** la barre de guidage (7) est conçue comme un tube de guidage (7a) pour un arbre d'entraînement (7b), l'entraînement (13) étant disposé à une extrémité (15) de la barre de guidage (7) tandis que le cylindre de ramassage (10) entraîné est disposé à l'autre extrémité (16) de la barre de guidage (7).

2. Dispositif selon la revendication 1,
**caractérisé en ce que** les supports au sol (3, 4) ont un axe de support commun (32), l'axe de support (32) et l'axe de rotation (33) du cylindre de ramassage (10) étant proches l'un de l'autre et à peu près parallèles.

3. Dispositif selon la revendication 1,
**caractérisé en ce que** la partie de paroi (34) se prolonge par une partie de guidage qui est conçue comme un capot d'éjection bombé (36) et la forme bombée du capot (36) est adaptée au tracé d'une trajectoire parabolique (35) de l'objet (11) à ramasser.

4. Dispositif selon la revendication 1,
**caractérisé en ce que** le sens de rotation du cylindre de ramassage (10) est tel que les objets (11, 12) sont amenés dans le récipient collecteur (30) sur une trajectoire (35) qui passe par-dessus le cylindre de ramassage (10).

5. Dispositif selon l'une des revendications 1 à 4,
**caractérisé en ce que** l'axe de support (32) est disposé à une distance (Sd) de l'axe de rotation (33) du cylindre de ramassage (10) qui est inférieure au diamètre (D1, D2) du cylindre de ramassage (10), l'axe de support (32) étant situé dans une zone spatiale (61) qui est définie par un cercle (62) dont le rayon (R) est inférieur à 0,4 fois le diamètre (D) du cylindre de ramassage (10), autour de l'axe de rotation (33) du cylindre de ramassage (10).

6. Dispositif selon l'une des revendications 1 à 5,
**caractérisé en ce que** l'axe de support (32) des supports au sol (3, 4) et l'axe de rotation (33) du cylindre de ramassage (10) sont très proches l'un de l'autre ou coïncident.

7. Dispositif selon l'une des revendications 1 à 6,
**caractérisé en ce que** l'axe de support (32) et l'axe de rotation (33) du cylindre de ramassage (10) sont réglables l'un par rapport à l'autre.

8. Dispositif selon la revendication 1,
**caractérisé en ce que** les supports au sol sont aptes à tourner et sont conçus comme des roues (3, 4), l'axe de support (32) définissant l'axe de rotation des roues (3, 4), et le diamètre (L) des roues (3, 4) correspondant à peu près au diamètre (D1, D2) du cylindre de ramassage (10).

9. Dispositif selon l'une des revendications 1 à 8,
**caractérisé en ce que** la surface de contact (70) du support au sol (3, 4) et la surface extérieure (71) du cylindre de ramassage (10) présentent un écartement relatif (w) qui va jusqu'à +/-10 mm.

10. Dispositif selon l'une des revendications 1 à 9,
**caractérisé en ce que** la largeur de travail (Z) du dispositif (1) est inférieure à 800 mm et est de préférence de 400 mm.

11. Dispositif selon la revendication 1,
**caractérisé en ce que** la partie de paroi (34) qui coopère avec le cylindre de ramassage (10) délimite sur son bord de carter (39) tourné vers le sol (5) une fente d'introduction (38), et il est prévu dans la zone de la fente d'introduction (38) un accessoire de ramassage (42) qui est conçu de préférence comme un profilé creux flexible (43a) ou comme un coin en mousse.

12. Dispositif selon la revendication 1,
**caractérisé en ce que** le cylindre de ramassage (10) est conçu comme un cylindre en mousse (10a), et les objets (11, 12) à ramasser roulent à l'intérieur du dispositif.

13. Dispositif selon la revendication 1,
**caractérisé en ce que** le cylindre de ramassage (10) est conçu comme un cylindre à disques (10b) et les objets (11, 12) à ramasser sont ramassés en étant coincés, les disques voisins (19c) du cylindre (10c) étant disposés suivant un angle (v) les uns par rapport aux autres.

14. Dispositif selon la revendication 1,
**caractérisé en ce que** le cylindre de ramassage (10) est conçu comme un cylindre à lamelles (10c), et les objets (11, 12) à ramasser sont introduits par raclage.

15. Dispositif selon l'une des revendications 1 à 14,
**caractérisé en ce que** le cylindre de ramassage (10) se compose de deux parties de cylindre à peu près identiques entre lesquelles est disposée une transmission (17) qui entraîne de préférence l'arbre de cylindre (18).

16. Dispositif selon l'une des revendications 1 à 15,
**caractérisé en ce que** le carter (2) peut être fermé, sur le côté tourné vers la poignée (7), par le récipient collecteur (30) à fixer, ledit récipient collecteur (30) délimitant l'espace de cylindre (9), étant posé de préférence sur la barre de guidage (7) et dépassant au moins en partie de celle-ci.

17. Dispositif selon la revendication 16,
**caractérisé en ce que** la barre de guidage (7) se trouve dans un logement en U (53) du récipient collecteur (30), le centre de gravité du récipient collecteur (30) se trouvant sur son plan longitudinal médian (54) qui divise symétriquement ledit logement en U (53), et le récipient collecteur (30) étant appliqué contre le carter (2) sous l'action d'une force de gravité partielle (A) et étant positionnée sur le carter (2) grâce à des éléments de centrage (50).

18. Dispositif selon la revendication 16 ou 17,
**caractérisé en ce que** la barre de guidage (7) comporte un rail de guidage (64) qui positionne correctement le récipient collecteur rapporté (30) sur le carter (2).

19. Dispositif selon l'une des revendications 16 à 18,
**caractérisé en ce que** les éléments de centrage (50) font partie d'une articulation oscillante (63) comportant un axe oscillant (65) à peu près parallèle à l'axe de rotation (33) du cylindre de ramassage (10).

20. Dispositif selon l'une des revendications 1 à 19,
**caractérisé en ce que** l'ouverture d'introduction (37) qui débouche dans le conduit collecteur (29) se trouve légèrement au-dessus du cylindre de ramassage (10).

21. Dispositif selon la revendication 1,
**caractérisé en ce que** pour séparer les objets (11) à ramasser d'objets ramassés accidentellement (12), il est prévu un séparateur qui est formé par une barrière mécanique (44) et qui est disposé de préférence devant le cylindre de ramassage (10).

22. Dispositif selon la revendication 21,
**caractérisé en ce que** le séparateur se compose d'un tamis ou d'une grille composée de barreaux longitudinaux juxtaposés qui s'étendent de préférence dans le sens de travail (8), une fente de séparation étant formée entre des barreaux longitudinaux voisins.

23. Dispositif selon la revendication 21,
**caractérisé en ce que** le séparateur est disposé entre l'espace de cylindre (9) et le récipient collecteur (30) et se compose de préférence d'une cloison (47), d'une brosse (45) ou d'un rideau (45a).
